# DEMANDE DE BREVET EUROPEEN

(11) **EP 1 318 004 A1**
(43) Date de publication de la demande: **11.06.2003**
(21) Numéro de dépôt: 02356251.5
(22) Date de dépôt: 03.12.2002
(51) Int. Cl.: B29C 45/33

(54) **Moule d'injection pour bouchons plastiques à chariot**

(30) Priorité: 05.12.2001 FR 0115728
(71) Demandeur: Curtil Societe Anonyme, 39200 St Claude (FR)
(72) Inventeur: Curtil, M. Bertrand, 39206 Saint-Claude Cedex (FR)
(74) Mandataire: Guerre, Dominique

(57) **Abrégé**

Le moule comprend :
- un plateau inférieur (2) et un plateau supérieur qui sont mobiles l'un par rapport à l'autre en translation entre une position ouverte et une position fermée du moule et qui définissent au moins une empreinte (4) de moulage d'un bouchon,
et en relation avec chaque empreinte :
- un noyau mobile,
- au moins deux mâchoires (7), pour le moulage extérieur de la ceinture d'inviolabilité, qui présentent chacune une demi empreinte de la ceinture et qui sont mobiles en translation entre une position, dite de moulage, dans laquelle les mâchoires sont rapprochées l'une de l'autre, et une position, dite de démoulage, dans laquelle les mâchoires sont éloignées,
- et des moyens de manoeuvre des mâchoires en translation.

Les moyens de manoeuvre (10) des mâchoires (7) comprennent des moyens moteurs (14) et les mouvements des mâchoires sont indépendants des mouvements des plateaux inférieur (2) et supérieur.

## Description

La présente invention concerne le domaine technique des moules utilisés pour le moulage, par injection de matière plastique, de bouchons, à ceinture d'inviolabilité, pour récipients.

De tels bouchons sont, par exemple, décrits par la demande FR-2 718 714 ou encore la demande FR-2 727 940 comprennent généralement un dessus, une jupe sensiblement cylindrique pourvue, sur sa face interne, d'un filet hélicoïdal et dont la base est prolongée par une ceinture formant témoin de violabilité lié à la jupe par une zone de moindre résistance généralement délimitée par une série de pontets sécables. La fabrication de tels bouchons est généralement effectuée au moyen d'un moule qui comprend un plateau inférieur et un plateau supérieur qui sont mobiles, l'un par rapport à l'autre, en translation horizontale entre une position ouverte et une position fermée du moule. Les plateaux supérieur et inférieur définissent au moins une empreinte de moulage d'un bouchon et le plus souvent une série d'empreintes. La partie d'empreinte, portée par les plateaux inférieur et supérieur, correspond alors à la surface extérieure du bouchon. Afin de conformer l'intérieur du bouchon et plus particulièrement le filet, s'il en existe un, et les éléments d'accrochage de la jupe d'inviolabilité sur le goulot d'un récipient, le moule comprend, en relation avec chaque empreinte, un noyau mobile équipé, de préférence, d'un système d'éjecteur. Enfin, le moule comprend, en relation avec chaque empreinte, au moins deux mâchoires pour le moulage extérieur de la ceinture d'inviolabilité et notamment des pontets de liaison entre cette ceinture d'inviolabilité et la jupe du bouchon. Afin d'éviter toute rupture des pontets, lors du démoulage du bouchon, il est nécessaire que les mâchoires soient mobiles en translation horizontale, entre une position, dite de moulage, dans laquelle les mâchoires sont rapprochées l'une de l'autre et une position, dite de démoulage, dans laquelle les mâchoires sont éloignées. Dans la mesure où les mâchoires sont mobiles, il est nécessaire de prévoir, sur le moule, des moyens de manoeuvre des mâchoires.

De tels moyens sont, par exemple, décrits par le brevet FR-1 456 836. Selon ce document, les moyens de manoeuvre comprennent des doigts inclinés portés par le plateau supérieur du moule et destinés à venir s'engager dans des alésages également inclinés des mâchoires mobiles. La pente des doigts et des alésages est alors adaptée pour que, lors d'un mouvement de fermeture du moule par rapprochement du plateau supérieur contre le plateau inférieur, l'engagement des doigts dans les alésages entraîne un rapprochement des mâchoires de moulage de la ceinture d'inviolabilité. Inversement, lors de l'ouverture du moule, la sortie des doigts hors des alésages entraîne un mouvement d'écartement des mâchoires.

Un tel dispositif donne satisfaction dans sa fonction d'ouverture et de fermeture des mâchoires et présente toutefois l'inconvénient d'être particulièrement fragile. En effet, un mauvais engagement des doigts du plateau supérieur dans les alésages des mâchoires est susceptible d'entraîner une rupture des doigts accompagnée, le plus souvent, d'une détérioration des éléments situés à proximité.

Afin de remédier à cet inconvénient, un brevet FR-2 080 466 décrit un système de rampe inclinée, solidaire des mâchoires et adapté à l'extérieur du moule dans lesquelles viennent s'engager des doigts de guidage portés par le plateau supérieur. Ainsi, lors d'un mouvement de fermeture du moule, par rapprochement du plateau supérieur vers le plateau inférieur, l'engagement des doigts dans les rainures entraîne une translation en fermeture des mâchoires. Inversement, l'ouverture du moule entraîne un écartement des mâchoires.

L'art antérieur a également envisagé d'aménager, pour la manoeuvre des mâchoires, en partie arrière de ces dernières, un talon incliné destiné à coopérer avec un coin ou un talon également incliné porté par le plateau supérieur pour que, lors de la fermeture du moule, le contact entre les talons du plateau et des mâchoires entraîne une fermeture de ces dernières.

Ces dispositifs permettent effectivement d'assurer une fermeture et une ouverture des mâchoires en réduisant les risques de rupture par rapport au système de manoeuvre mettant en oeuvre des doigts saillants. Toutefois, de tels systèmes présentent l'inconvénient d'induire des chocs lors de la fermeture du moule, de sorte qu'il est nécessaire de limiter la vitesse de déplacement du plateau supérieur par rapport au plateau inférieur et aux mâchoires qu'il porte.

Il apparaît donc le besoin d'un nouveau système de manoeuvre en ouverture et en fermeture des mâchoires de moulage des ceintures d'inviolabilité qui permette d'augmenter la cadence d'utilisation du moule en réduisant les temps de cycle et plus particulièrement d'ouverture et de fermeture des mâchoires, tout en limitant les risques de rupture et les phénomènes d'usure.

Afin d'atteindre cet objectif, l'invention concerne un moule pour le moulage par injection de bouchons à ceinture d'inviolabilité en matière plastique du type comprenant
- un plateau inférieur et un plateau supérieur qui sont mobiles l'un par rapport à l'autre en translation entre une position ouverte et une position fermée du moule et qui définissent au moins une empreinte de moulage d'un bouchon,
et en relation avec chaque empreinte :
- un noyau mobile,
- au moins deux mâchoires, pour le moulage extérieur de la ceinture d'inviolabilité qui présentent chacune une demi empreinte de la ceinture et qui sont mobiles en translation horizontales entre une position, dite rapprochée, de moulage rapprochée, et une position éloignée dite de démoulage,
- et des moyens de manoeuvre des mâchoires en translation.

Selon l'invention, ce moule est caractérisé en ce que les moyens de manoeuvre des mâchoires comprennent des moyens moteurs et en ce que les mouvements des tiroirs sont indépendants des mouvements des plateaux inférieur et supérieur.

Selon une caractéristique préférée de l'invention, les moyens de manoeuvre des deux mâchoires, associés à une même empreinte, sont actionnées pour un même moyen moteur.

Les moyens moteurs peuvent être réalisés de toute façon appropriée dans la mesure où ils sont à même d'assurer un mouvement des tiroirs indépendamment des mouvements des plateaux inférieur et supérieur.

Ainsi, les moyens moteurs peuvent être constitués par un ou plusieurs vérins mécaniques, tels que par exemple hydrauliques ou pneumatiques ou encore électriques. Les moyens moteurs peuvent aussi être constitués par des systèmes de manoeuvre à moteur électrique ou électro-aimant.

Selon une autre caractéristique de l'invention, les moyens de manoeuvre des tiroirs comprennent des cames agissant sur les tiroirs.

Selon une forme préférée de réalisation de l'invention, les mâchoires sont guidées en translation dans au moins une glissière d'axe X-X' aménagée sur le plateau inférieur. Les moyens de manoeuvre comprennent alors au moins deux tiroirs qui sont guidés dans des glissières d'axe Y-Y' perpendiculaires à l'axe X-X' et qui sont solidaires d'un chariot déplacé en translation par un moyen moteur. Chaque tiroir est alors lié à au moins une mâchoire de manière qu'une translation d'un tiroir entraîne une translation réciproque de la mâchoire correspondante.

De manière préférée mais non strictement nécessaire, chaque mâchoire comprend alors au moins une rainure rectiligne d'axe Δ oblique ou incliné par rapport à l'axe X-X'. Cette rainure de la mâchoire est alors destinée à recevoir un doigt de manoeuvre porté par un tiroir.

Selon l'invention, le moule peut comprendre plusieurs empreintes disposées les unes à côté des autres et les tiroirs de manoeuvre des mâchoires sont alors tous solidaires d'un même chariot, de manière à permettre une manoeuvre simultanée de toutes les mâchoires du moule.

L'invention concerne également un procédé de moulage par injection de bouchons à ceinture d'inviolabilité, caractérisé en ce qu'il consiste à mettre en oeuvre un moule selon l'invention et à commander le passage des mâchoires en position écartée après injection de matière plastique et avant l'ouverture du moule par écartement des plateaux inférieur et supérieur.

Diverses autres caractéristiques de l'invention ressortent de la description ci-dessous, effectuée en référence aux dessins annexés qui illustrent un exemple non limitatif de réalisation d'un moule selon l'invention.

La figure 1 est une coupe schématique d'un moule selon l'invention, en position fermée.

La figure 2 est une vue, selon la ligne II-II, du plateau inférieur du moule tel qu'illustré à la figure 1.

La figure 3 est une coupe transversale analogue à la figure 1, montrant le moule en position ouverte.

La figure 4 est une vue de dessus de mâchoires pour le moulage de la ceinture d'inviolabilité selon l'invention.

La figure 5 est une coupe selon la ligne V-V de la figure 4.

La figure 6 est une vue de dessus selon la ligne VI-VI de la figure 3 du plateau inférieur du moule conforme à l'invention.

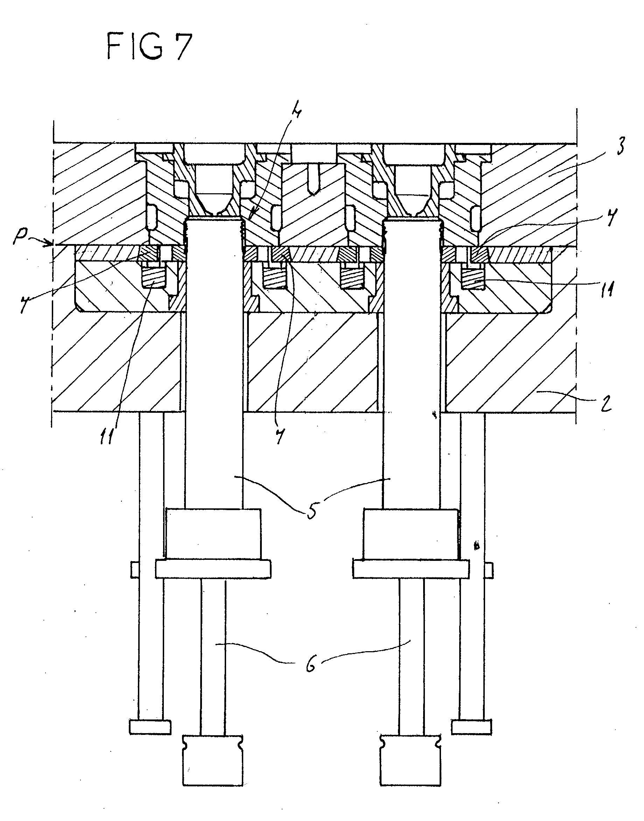

La figure 7 est une coupe transversale analogue à la figure 1, montrant une variante de réalisation d'un moule selon l'invention.

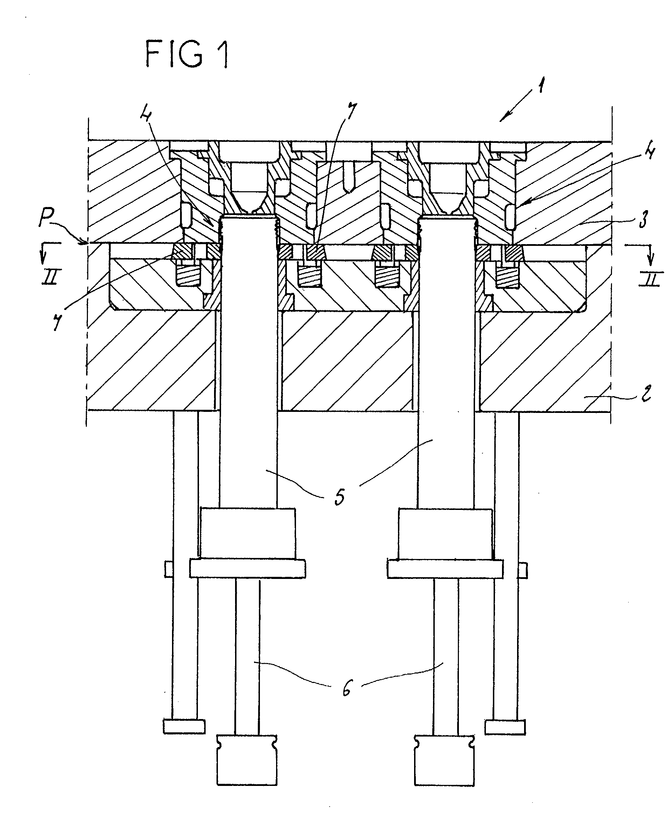

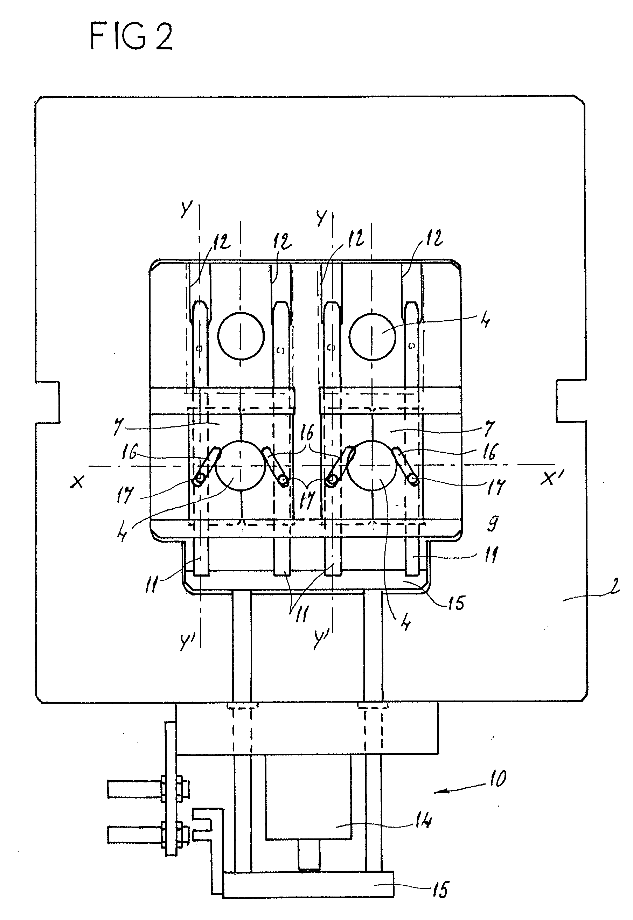

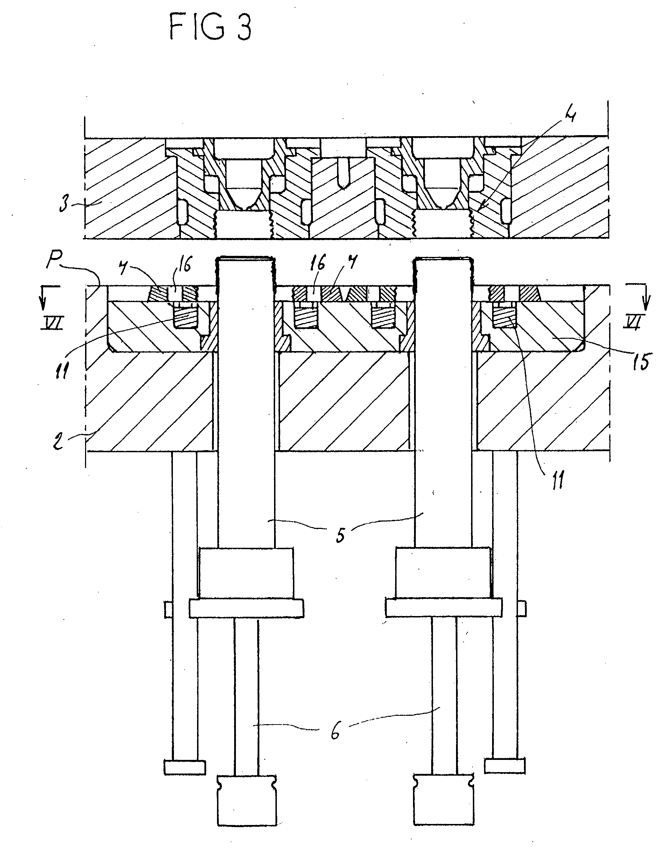

Comme cela ressort des figures 1 et 2, un moule, selon l'invention, désigné dans son ensemble par la référence 1, comprend un plateau inférieur 2 et un plateau supérieur 3. Les plateaux inférieur 2 et supérieur 3 sont mobiles l'un par rapport à l'autre en translation entre une position fermée du moule, telle qu'illustrée à la figure 1, et une position ouverte plus particulièrement représentée à la figure 3. Les moyens de manoeuvre et de support des plateaux 2 et 3, non représentés, appartiennent généralement à la presse d'injection et relève des connaissances générales de l'homme du métier. Selon l'exemple illustré, afin de faciliter la représentation, le mouvement d'ouverture correspond à une translation verticale. Toutefois, lors de la mise en place du moule, sur une presse d'injection, l'ouverture du moule s'effectue en translation horizontale.

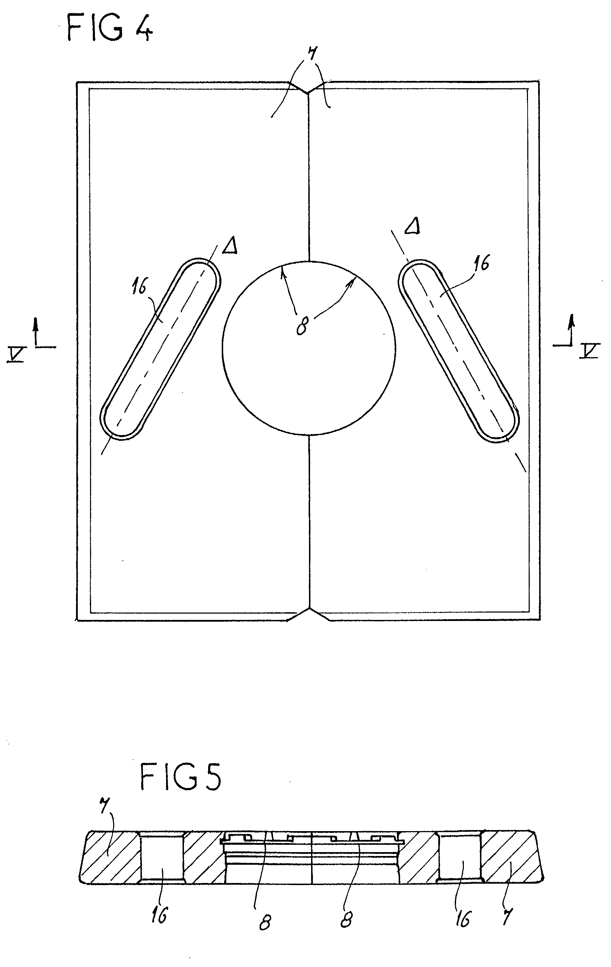

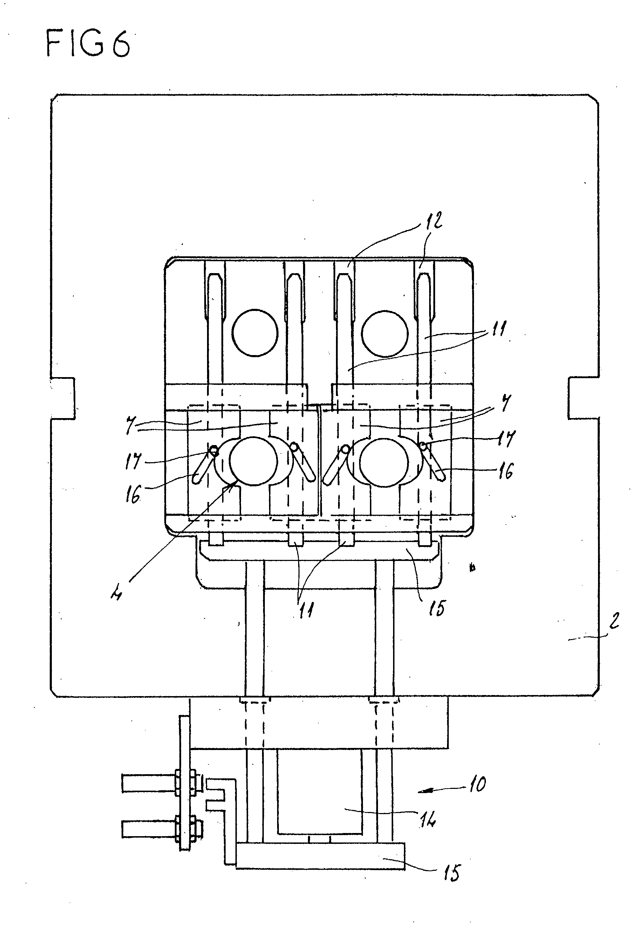

Les plateaux inférieur 2 et supérieur 3 définissent ensemble au moins une et, selon l'exemple illustré, quatre empreintes 4, chacune destinée au moulage par injection d'un bouchon en matière plastique. Le moule 1 comprend, en association avec chaque empreinte 4, un noyau 5 mobile par rapport au plateau inférieur 2 et équipé d'un injecteur 6 afin de permettre le moulage et le démoulage de la ceinture d'inviolabilité ou de parties extérieures à contre-dépouille du bouchon, le moule 1 comprend, en relation avec chaque empreinte 4, au moins deux mâchoires 7 qui, comme le montrent les figures 4 et 5, présentent chacune une demi-empreinte 8. Selon l'exemple illustré, les demi-empreintes 8 font partie intégrante de chaque mâchoire 7.

Compte tenu du relief en contre-dépouille de la partie extérieure de la ceinture d'inviolabilité, il est nécessaire de pouvoir écarter les mâchoires pour dégager la ceinture d'inviolabilité et démouler cette dernière sans risque de rupture. Ainsi, les mâchoires 7 doivent t-elles être mobiles en translation parallèle au plan de joint du moule, entre une position de moulage rapprochée, telle qu'illustrée à la figure 2, et une position de démoulage dans laquelle les mâchoires 7 sont éloignées l'une de l'autre, comme le montrent les figures 3 et 6. Ainsi, les mâchoires 7 sont, selon l'exemple illustré, mobiles en translation horizontale d'axe X-X' et guidées à cette fin dans une glissière 9 aménagée dans le plateau inférieur 2. Il est à noter que, selon l'exemple illustré, la même glissière 9 assure le guidage en translation de deux paires de mâchoires 7, de deux empreintes 4 situées l'une à côté de l'autre.

Conformément à une caractéristique essentielle de l'invention, afin d'assurer les déplacements des mâchoires 7, le moule 1 est équipé de moyens de manoeuvre 10 des mâchoires 7 entre leur position de moulage et leur position de démoulage. Selon l'exemple illustré, les moyens de manoeuvre 10 comprennent, en relation avec chaque mâchoire 7, un tiroir 11 guidé dans une glissière 12 d'axe Y-Y' perpendiculaire à l'axe X-X' et aménagé dans le plateau inférieur 2 sous les mâchoires 7. Il est à noter que, selon l'exemple illustré, les tiroirs 11 sont associés à deux mâchoires de deux empreintes distinctes, alignées selon la direction Y-Y'. Les tiroirs 11 sont tous solidaires d'un même chariot 15 qui est déplacé en translation par un moyen moteur 14, tel que par exemple un vérin pneumatique, entre une position d'extension, telle qu'illustrée à la figure 2, correspondant à une position fermée ou rapprochée des mâchoires 7 et une position de rétraction, telle qu'illustrée à la figure 6, correspondant à une position, dite de démoulage, écartée des mâchoires 7.

Afin de transformer le mouvement de translation des tiroirs 11 en une ouverture ou une fermeture des mâchoires 7, l'invention prévoit de mettre en oeuvre un système de liaison à came entre les tiroirs 11 et les mâchoires 7. Selon l'exemple illustré, ce système à came comprend une rainure 16, aménagée dans chaque mâchoire 7, de manière à présenter une orientation oblique ou inclinée par rapport à l'axe X-X' de translation des mâchoires. Chaque tiroir 11 présente alors un pion ou doigt 17 destiné à coopérer avec une rainure 16 de mâchoire. Ainsi, la liaison, entre le doigt 17 et la rainure correspondante 16 d'une mâchoire, permet de transformer une translation d'axe Y-Y' des tiroirs 11 en une translation réciproque d'axe X-X' des mâchoires.

Lors de la mise en oeuvre du moule 1 et compte tenu de la conception des moyens de manoeuvre 10 faisant intervenir des moyens moteurs 16, il est possible d'assurer un mouvement d'ouverture et de fermeture des mâchoires indépendamment de la position ou du mouvement des plateaux inférieur 2 et supérieur 3 du moule 1.

Ainsi, par exemple, il est possible, après l'injection de la matière plastique constitutive des bouchons dans les empreintes 4, de procéder à l'ouverture des mâchoires 7 avant l'ouverture du moule 1. De la même façon, il est possible de procéder à la fermeture des mâchoires avant la fermeture du moule 1. Cette indépendance, entre les mouvements des mâchoires 2 et les mouvements des plateaux inférieur 2 et supérieur 3 du moule 1, permet alors d'augmenter les cadences de moulage et donc d'optimiser l'utilisation du moule.

De plus, la mise en oeuvre de moyens moteurs 16 propres aux mâchoires, évite les a coups et les chocs entraînant des risques de rupture, comme cela était le cas pour les systèmes de manoeuvre des mâchoires selon l'art antérieur.

Selon l'exemple illustré, la manoeuvre autonome des mâchoires 7 est effectuée avec des systèmes de tiroirs. Toutefois, selon l'invention, il pourrait être envisagé de mettre un tout autre système de manoeuvre à came ou non, dans la mesure où ce système de manoeuvre comprend des moyens moteurs permettant d'assurer les déplacements des mâchoires indépendamment des mouvements des plateaux inférieur 2 et supérieur 3. Ainsi, il pourrait être envisagé d'associer, à chaque empreinte, des moyens de manoeuvre des mâchoires 7 correspondantes.

Selon l'exemple illustré et décrit précédemment, les mouvements des mâchoires peut être effectué en position fermée du moule.

Selon une variante de réalisation plus particulièrement illustrée à la figure 8, le plateau supérieur comprend des clefs de verrouillage destinées à venir bloquer les mouvements des mâchoires en position fermée du moule. Cette disposition évite alors tous mouvements intempestifs des mâchoires lors de l'injection de la matière plastique. Dans ce cas, l'ouverture des mâchoires 7 intervient, après une courte ouverture du moule, de manière à échapper les clefs de verrouillages.

Bien entendu, l'invention n'est pas limitée aux exemples décrits ci-dessus et diverses modifications peuvent y être apportées, sans sortir de son cadre.

## Revendications

1. Moule pour le moulage par injection de bouchons à ceinture d'inviolabilité en matière plastique du type comprenant :
- un plateau inférieur (2) et un plateau supérieur (3) qui sont mobiles l'un par rapport à l'autre en translation entre une position ouverte et une position fermée du moule et qui définissent au moins une empreinte (4) de moulage d'un bouchon,
et en relation avec chaque empreinte :
- un noyau mobile (5),
- au moins deux mâchoires (7), pour le moulage extérieur de la ceinture d'inviolabilité, qui présentent chacune une demi empreinte (8) de la ceinture et qui sont mobiles en translation entre une position, dite de moulage, dans laquelle les mâchoires sont rapprochées l'une de l'autre, et une position, dite de démoulage, dans laquelle les mâchoires sont éloignées,
- et des moyens de manoeuvre des mâchoires en translation,
**caractérisé en ce que** les moyens de manoeuvre (10) des mâchoires (7) comprennent des moyens moteurs (14) et les mouvements des mâchoires sont indépendants des mouvements des plateaux inférieur (2) et supérieur (3).

2. Moule selon la revendication 1, **caractérisé en ce que** les moyens de manoeuvre (10) des deux mâchoires (7), associés à une même empreinte, sont actionnées pour un même moyen moteur (14).

3. Moule selon la revendication 1 ou 2, **caractérisé en ce que** les moyens de manoeuvre des mâchoires (7) comprennent des cames agissant sur les mâchoires (7).

4. Moule selon l'une des revendications 1 à 3, **caractérisé en ce que** les mâchoires (7) sont guidées en translation dans au moins une glissière (9) d'axe X-X' et **en ce que** les moyens de manoeuvre (10) comprennent au moins deux tiroirs (11) qui sont guidés dans des glissières (12) d'axe Y-Y' perpendiculaires à l'axe X-X' qui sont solidaires d'un chariot (15) déplacé en translation par un moyen moteur (16) et qui sont chacun liés à au moins une mâchoire (7) de manière qu'une translation d'un tiroir (11) entraîne une translation réciproque de la mâchoire correspondante (7).

5. Moule selon la revendication 4, **caractérisé en ce que** chaque mâchoire (7) comprend au moins une rainure rectiligne (16) d'axe Δ incliné par rapport à l'axe X-X' et destinée à recevoir un doigt de manoeuvre (17) porté par un tiroir (11).

6. Moule selon la revendication 4 ou 5, **caractérisé en ce qu'**il comprend plusieurs empreintes (4) et **en ce que** les tiroirs de manoeuvre des mâchoires (7) sont tous solidaires d'un même chariot (15) de manière à permettre une manoeuvre simultanée de toutes les mâchoires du moule.

7. Moule selon l'une des revendications 1 à 6, **caractérisé en ce que** les moyens moteurs (16) des moyens de manoeuvre (10) comprennent un vérin.

8. Procédé de moulage par injection de bouchons à ceinture d'inviolabilité, **caractérisé en ce qu'**il consiste à :
- mettre en oeuvre un moule (1) selon l'une des revendications 1 à 7, et
- commander le passage des mâchoires (7) en position rapprochée avant la fermeture du moule (1).

9. Procédé de moulage selon la revendication 8, **caractérisé en ce qu'**il consiste à commander le passage des mâchoires (7) en position écartée après l'injection de matière plastique avant l'ouverture du moule.

10. Procédé de moulage selon la revendication 8, **caractérisé en ce qu'**il consiste à commander le passage des mâchoires (7) en position écartée après l'injection de matière plastique et après une très courte ouverture du moule (1).
